# EUROPÄISCHE PATENTSCHRIFT

(11) **EP 3 354 527 B1**
(45) Veröffentlichungstag und Bekanntmachung des Hinweises auf die Patenterteilung: **29.12.2021**
(21) Anmeldenummer: 18156751.2
(22) Anmeldetag: 03.02.2016
(51) Int. Cl.: B60T 8/36, B60T 13/68, B60T 8/1755

(54) **VERFAHREN ZUM EINSTELLEN VON BREMSDRÜCKEN EINES KRAFTFAHRZEUGS ÜBER ANSTEUERUNG EINES DRUCKSTEUERVENTILS, BREMSANLAGE ZUR DURCHFÜHRUNG DES VERFAHRENS SOWIE KRAFTFAHRZEUG**
METHOD FOR ADJUSTING BRAKE PRESSURES OF A MOTOR VEHICLE BY CONTROLLING A PRESSURE CONTROL VALVE, BRAKE SYSTEM FOR CARRYING OUT THE METHOD AND MOTOR VEHICLE
PROCÉDÉ DE RÉGLAGE DE PRESSION DE FREINAGE D'UN VÉHICULE À L'AIDE DE LA COMMANDE D'UNE SOUPAPE DE RÉGLAGE DE PRESSION, INSTALLATION DE FREINAGE PERMETTANT LA MISE EN UVRE DUDIT PROCÉDÉ AINSI QUE VÉHICULE À MOTEUR

(30) Priorität: 07.02.2015 DE 102015001628
(43) Veröffentlichungstag der Anmeldung: 01.08.2018
(62) Teilanmeldung aus: 16702663.2
(73) Patentinhaber: ZF CV Systems Hannover GmbH, 30453 Hannover (DE)
(72) Erfinder: Eckert, Horst, 31547 Rehburg-Loccum (DE)
(74) Vertreter: Rabe, Dirk-Heinrich

(56) Entgegenhaltungen:
- EP-A2- 1 028 043
- DE-A1- 2 406 690
- DE-A1-102004 042 647

## Beschreibung

Die Erfindung betrifft ein Verfahren zum Einstellen von Bremsdrücken eines Kraftfahrzeugs gemäß dem Oberbegriff des Anspruchs 1. Die Erfindung betrifft außerdem gemäß Anspruch 10 eine Bremsanlage zur Durchführung des Verfahrens zum Einstellen des Bremsdrucks sowie gemäß Anspruch 14 ein Kraftfahrzeug mit einer solchen Bremsanlage zur Durchführung des Verfahrens.

Zum Abbremsen eines Kraftfahrzeugs werden die Räder des Kraftfahrzeugs gebremst, wobei üblicherweise die Bremszylinder der Räder betätigt werden. Bei Nutzfahrzeugen wird der erforderliche Bremsdruck üblicherweise pneumatisch erzeugt. Fordert der Fahrer des Fahrzeugs eine Bremsung über ein Bremspedal an, so setzt die Bremsanlage seinen Fahrerbremswunsch in einen den Fahrerbremswunsch entsprechenden Bremsdruck um. Das Bremspedal wirkt dabei über ein Betriebsbremsventil oder ist als Signal erzeugender Wegsensor ausgebildet.

Antiblockiersysteme (ABS) sind Regeleinrichtungen im Bremssystem, die das Blockieren der Räder beim Bremsen verhindern und somit die Lenkbarkeit und die Fahrstabilität erhalten. Eine Steuereinheit stellt dabei den Bremsdruck in den angeschlossenen Bremszylindern unter Berücksichtigung von ermittelten dynamischen Zustandsgrößen der zu bremsenden Räder über ein Drucksteuerventil am jeweiligen Rad ein. Die dynamische Zustandsgröße wird oft aus den Messergebnissen von Drehzahlsensoren an den Rädern ermittelt. Tritt an einem Rad eine Blockierneigung auf, so nehmen Radumfangsverzögerung und Radschlupf stark zu. Wenn die ermittelte dynamische Zustandsgröße bestimmte kritische Werte überschreitet, greift die Steuereinheit durch geeignete Steuermaßnahmen über das Drucksteuerventil ein. Dabei werden während des Eingriffs wechselweise immer wieder die Stabilität und die Instabilität der Radbewegung erkannt und durch eine Folge von Druckaufbau-, Druckhalte- und Druckabbauphasen üblicherweise im Schlupfbereich mit maximaler Bremskraft eingestellt.

Die DE 10 2004 042 647 A1 offenbart ein Verfahren zum Einstellen von Bremsdrücken eines Kraftfahrzeugs mittels eines Drucksteuergeräts zur Variation des Bremsdrucks in wenigstens einer Radbremse des Kraftfahrzeugs, das zur Variation des Bremsdrucks wenigstens ein Einlass- und ein Auslassventil aufweist. Der Einschaltzeitpunkt des Auslassventils wird dabei in Abhängigkeit des Einschaltzeitpunkts des Einlassventils gesteuert.

EP 1 028 043 B1 offenbart eine derartige Druckregeleinrichtung für Nutzfahrzeuge, wobei das Drucksteuerventil ein als Einlassventil wirkendes 2/2-Wegeventil und ein als Auslassventil wirkendes 2/2-Wegeventil aufweist. Die Betätigung des Einlassventils erfolgt bei der bekannten Einrichtung in der Druckaufbauphase. Unter bestimmten Voraussetzungen erfolgt eine Betätigung des Einlassventils auch in der Druckhaltephase oder sogar in der Druckabbauphase. Das Auslassventil wird in erster Linie in der Druckabbauphase betätigt. Das Auslassventil kann aber bei der bekannten Einrichtung ebenfalls bei Vorliegen bestimmter Voraussetzungen auch in der Druckhaltephase oder in der Druckaufbauphase betätigt werden. Das Betätigen des Auslassventils in der Druckaufbauphase, beziehungsweise des Einlassventils in der Druckabbauphase soll ein Gegenregeln ermöglichen, das heißt, Überschwingtendenzen bei sich schnell änderndem Druck verringern.

Das Drucksteuerventil mit seiner Kombination aus Einlassventil und Auslassventil wird von der Steuereinheit für Eingriffe innerhalb des Antiblockiersystems verwendet und eingesetzt. Das Einlassventil ist stromlos offen, das heißt durchgängig, und das Auslassventil geschlossen, wodurch im normalen Bremsbetrieb aufgrund des Fahrerwunsches entsprechender Bremsdruck über ein Betriebsbremsventil aufgebaut wird.

Herkömmlich stellen die Steuereinheiten von Antiblockiersystemen den Bremsdruck nach so genannten internen Bremsanforderungen ein, das heißt als Steuereingriffe im Rahmen des Antiblockiersystems. Neben den von der Steuereinheit unabhängig vom Fahrer bestimmten Steuereingriffen innerhalb des Antiblockiersystems können die internen Bremsanforderungen auch den Fahrerwunsch berücksichtigen, insbesondere wenn ein Fahrerbremswunsch mittels eines elektrischen Bremssignalgebers erzeugt und der Steuereinheit eingegeben wird.

Es hat sich gezeigt, dass auch bei einer Aussteuerung des Bremsdrucks mittels der Drucksteuerventile des Antiblockiersystems häufig große Drucksprünge auftreten, die zu einer unbefriedigenden Regelgüte des Bremsdrucks und damit letztendlich der Fahrzeugverzögerung führen. Insbesondere wenn das Druckgefälle zwischen anstehendem Vorratsdruck am Einlassventil und dem ausgesteuerten Bremsdruck groß ist, treten inakzeptabel große Sprünge der Druckänderungen auf. Dies ist insbesondere zu Bremsbeginn bei einer externen Bremsanforderung der Fall.

Insbesondere bei kleinen zu belüftenden Volumina sind die Drucksprünge so groß, dass bisher nur eine völlig unzufrieden stellende Regelgüte erreichbar ist. Kleine Volumina treten häufig auf beispielsweise bei Zugfahrzeugen mit kleinen Bremszylindern oder Fahrzeugkombinationen mit einer Steuerung des Bremssystems des Anhängefahrzeugs über das Zugfahrzeug.

Außerdem sind oft, beispielsweise bei der Einstellung des Bremsdrucks aufgrund externer Bremsanforderung, kleine Drucksprünge gewünscht. Außer den internen Bremsanforderungen, insbesondere den Steuereingriffen des Antiblockiersystems, muss nämlich die Bremsanlage des Kraftfahrzeugs oft auch externe Bremsanforderungen umsetzen. Externe Bremsanforderungen können dabei Anforderungen von anderen Fahrerassistenzsystemen des Fahrzeugs sein. Insbesondere bei Nutzfahrzeugen werden verschiedene Fahrerassistenzsystemen mit separaten Einrichtungen angeordnet. Jedes dieser Fahrerassistenzsysteme kann bei Vorliegen bestimmter Eingriffsvoraussetzungen ein Bremsbedürfnis ermitteln, welches von der Bremsanlage umzusetzen ist.

Der Bremsdruck wird üblicherweise bei externen Bremsanforderungen nicht in einem geschlossenen Regelkreis geregelt, sondern nur einfach gesteuert. Bei der Aussteuerung des Bremsdrucks erfolgt kein Soll-/Istwert-Abgleich, da keine Istwert-Messung des Bremsdrucks vorgesehen, beziehungsweise vorhanden ist. Es ist dabei bekannt, den Bremsdruck mittels eines 3/2-Wegeventils auszusteuern. Ein derartiges 3/2-Wegeventil bietet dabei allerdings nur zwei Schaltzustände, nämlich einerseits zum Erhöhen und andererseits zum Senken des Bremsdrucks. Bei der Aussteuerung erfolgt ein häufiger Wechsel zwischen Druckanstieg und Drucksenkung mit jeweils maximalen Gradienten, wobei der Gradient jeweils abhängig ist von den aktuellen Druckniveauverhältnissen, das heißt zum einen dem Verhältnis des anstehenden Vorratsdruck zum ausgesteuerten Bremsdruck und dem Verhältnis des ausgesteuerten Bremsdrucks zum Referenzdruck (Atmosphäre). Ferner wird der Gradient von dem zu belüftenden Volumen des Bremszylinders beeinflusst.

Die Drucksteuerventile der Antiblockiersysteme sind nämlich üblicherweise für die Zwecke des Antiblockiersystems optimiert und weisen große Be- und Entlüftungsquerschnitte auf. Gerade aufgrund der großen Querschnitte kommt es jedoch bei externen Bremsanforderungen zu unbefriedigender Güte der Druckregelung, so dass oft 3/2-Wegeventile zur Steuerung des Bremsdrucks bei externen Bremsanforderungen bevorzugt werden und entsprechend zur Einstellung des Bremsdrucks angesteuert werden.

Kleine Bremsvolumina sind insbesondere auch regelmäßig bei Einsatz von Anhängefahrzeugen zu belüften, wenn das Bremssystem des Anhängefahrzeugs über eine Bremsdruckleitung vom Zugfahrzeug her indirekt gesteuert wird. In diesem Fall ist ein vergleichsweise kleines Volumen zwischen dem Drucksteuerventil und einem weiteren Ventil vor dem Eingang des Anhängerbremssystems zu entlüften bzw. zu belüften.

Der vorliegenden Erfindung liegt die Aufgabe zugrunde, eine genauere und schnellere Einstellung des Bremsdrucks bei Verringerung des Luftmengenbedarfs zu ermöglichen.

Diese Aufgabe wird erfindungsgemäß durch ein Verfahren zum Einstellen des Bremsdrucks mit den Merkmalen des Anspruchs 1 gelöst. Die Aufgabe wird außerdem durch eine Bremsanlage gemäß Anspruch 10 sowie gemäß Anspruch 14 durch ein Kraftfahrzeug mit einer solchen Bremsanlage zur Durchführung eines solchen Verfahrens gelöst.

Erfindungsgemäß ist vorgesehen, dass die Steuerzeiten des Auslassventils des Drucksteuerventils in Abhängigkeit der Steuerung des Einlassventils bestimmt werden. Entsprechend ist die zur Bestimmung der Steuerzeiten des Auslassventils in Abhängigkeit der Steuerung des Einlassventils ausgebildet. Die Erfindung hat erkannt, dass ein Drucksteuerventil eines Antiblockiersystems nicht nur als eine gemeinsame Einheit der kombinierten Ventile ansteuerbar ist, sondern zwei getrennt ansteuerbare Ventile gegeben sind. Durch die erfindungsgemäße Abhängigkeit der Steuerzeiten des Auslassventils von der Steuerung des Einlassventils können auch bei kleinen zu belüftenden Volumen die für hohe Regelgüte erforderlichen kleinen Druckänderungen bewirkt werden.

Die Steuerzeiten des Auslassventils werden in Abhängigkeit der Steuerzeiten des Einlassventils bestimmt, so dass unmittelbar nach einer Ansteuerung des Einlassventils stets eine von der zurückliegenden Einlassventil- Steuerzeit abhängige Ansteuerung des Auslassventils erfolgt. Es ist dabei möglich und vorgesehen, dass die Ansteuerung des Auslassventils gleichzeitig mit einer Ansteuerung des Einlassventils oder zeitversetzt nach oder vor Beginn einer Ansteuerung des Einlassventils, stets unmittelbar nach Beendigung einer Ansteuerung des Einlassventils oder auch zeitversetzt nach Beendigung einer Ansteuerung erfolgt.

Die Erfindung ist besonders zur Einstellung des Bremsdrucks in Bremssystemen geeignet, welche vergleichsweise kleine über das Drucksteuerventil zu belüftende bzw. zu entlüftende Volumina aufweisen.

In einer vorteilhaften Ausführungsform stellt die Steuereinheit in einem externen Bremsmodus, das heißt zur Umsetzung einer externen Bremsanforderung, die Steuerzeiten des Auslassventils des Drucksteuerventils in Abhängigkeit der Steuerung des Einlassventils bestimmt werden. Entsprechend ist die Steuereinheit für den Empfang einer vom Fahrerbremswunsch unabhängigen externen Bremsanforderung und zur Bestimmung der Steuerzeiten des Auslassventils in Abhängigkeit der Steuerung des Einlassventils ausgebildet.

Fahrerassistenzsysteme, welche eine externe Bremsanforderung vorgeben, sind beispielsweise Rollstabilitätssysteme ("RSC=roll stability control"), Abstandsregelungen ("ACC=adaptive cruise control"). Die Erfindung ermöglicht durch die Ansteuerung des Auslassventils, gegebenenfalls gleichzeitig mit der Ansteuerung des Einlassventils, sehr kleine Drucksprünge und somit eine hohe Regelgüte. Beispielsweise bei Stabilitätssystemen für Fahrzeugkombinationen ("CSC=combination stability control") werden erfindungsgemäß über das Auslassventil möglichst kleine Drucksprünge angesteuert, etwa in Schritten von Null ausgehend und nach einer vorgegebenen Funktion ansteigend. Insbesondere wird das Bremssystem des Anhängefahrzeugs über das Drucksteuerventil mit Einlassventil und Auslassventil und über das die Bremsanlage des Anhängefahrzeugs ansteuernde Kontrollventil mit möglichst kleinen Drucksprüngen angesteuert. Auch bei einem Bremssystem mit Bremsung einzelner Räder ist eine Einstellung des Bremsdrucks über eine Bestimmung der Steuerzeiten des Auslassventils des Drucksteuerventils in Abhängigkeit der Steuerung des Einlassventils vorteilhaft. Ferner erfolgt auch bei einem Blockierschutzeingriff eines Antiblockiersystems (ABS) eine hohe Regelgüte durch erfindungsgemäße Bestimmung der Steuerzeiten des Auslassventils des Drucksteuerventils in Abhängigkeit der Steuerung des Einlassventils.

In einer vorteilhaften Ausführungsform ist ein Bremssystem eines Anhängefahrzeugs indirekt über eine Bremsdruckleitung für das Anhängefahrzeug und ein in dieser Bremsdruckleitung angeordnetes Drucksteuerventil aktivierbar. Dabei ist eine Bremsdruckleitung für das Anhängefahrzeug mit dem in dieser Bremsdruckleitung angeordneten Drucksteuerventil an einen pneumatischen Kupplungskopf angeschlossen, an welchen ein Bremssystem des Anhängefahrzeugs ankuppelbar ist. Auf diese Weise ist nämlich nur ein kleines Volumen in der Bremsdruckleitung zwischen dem Drucksteuerventil und einem weiteren Ventil am Eingang zum Bremssystem des Anhängefahrzeugs zu Belüften bzw. zu Entlüften.

Die Steuerzeiten des Auslassventils werden in einer Ausführungsform der Erfindung durch Addition einer vorgegebenen Zeitspanne, beispielsweise drei Millisekunden, zur Steuerzeit der vorangegangenen Steuerzeit des Einlassventils ermittelt.

Überschneiden sich bei Druckerhöhungen wenigstens im unteren Bremsdruckbereich wenigstens teilweise die Steuerzeiten des Einlassventils und des Auslassventils, so können auch bei kleinen zu belüftenden Volumina überhöhte Drucksprünge verhindert werden.

In einer vorteilhaften Ausführungsform der Erfindung wird die Anzahl der Ansteuerungen des Einlassventils während des Aufbaus von Bremsdruck gezählt und die Steuerzeiten des Auslassventils in Abhängigkeit der Anzahl bereits erfolgter Ansteuerung des Einlassventils bestimmt. Während des Bremsvorgangs erfolgen nämlich stets mehrere voneinander zeitlich abgesetzte Ansteuerungen des Einlassventils. Durch eine auf die Anzahl der bereits erfolgten Öffnungen des Einlassventils abgestimmte Steuerzeit des Auslassventils kann der Drucksprung aufgrund der Öffnung des Einlassventils relativiert werden, beziehungsweise kann zu großen Drucksprüngen entgegengewirkt werden. Die Anzahl der Ansteuerungen des Einlassventils werden gezählt und abgespeichert und die jeweils laufende Ordnungszahl der bisher erfolgten Ansteuerungen des Einlassventils zum Bestimmen einer entsprechenden Steuerzeit des Auslassventils herangezogen.

Erfindungsgemäß wird während des externen Bremsmodus ein Korrekturfaktor ermittelt, mit dem die Steuerzeiten des Einlassventils zur Bestimmung der Steuerzeiten des Auslassventils gewichtet werden. Die Steuerzeiten des Auslassventils werden entsprechend mit Hilfe des Korrekturfaktors ermittelt. Vorteilhaft wird der Korrekturfaktor in Abhängigkeit einer gemessenen Fahrzeugverzögerung nach einer vorgegebenen Ermittlungsvorschrift laufend ermittelt. Im Unterschied zu einem Setzen eines konstanten Korrekturfaktors wird daher der dynamische Zustand des Kraftfahrzeugs beziehungsweise die noch verbleibende Bremsanforderung während des Bremsvorgangs berücksichtigt.

In einer vorteilhaften Ausführungsform wird der Korrekturfaktor für die Bestimmung der Steuerzeiten des Auslassventils in Abhängigkeit der Steuerzeiten des Einlassventils seinerseits in Abhängigkeit einer Summe der Steuerzeiten bereits erfolgter Ansteuerungen des Einlassventils und solcher Steuerzeiten des Auslassventils bestimmt, die zuvor im Zusammenhang mit einer Reduzierung des Bremsdrucks bestimmt wurden, nach einer vorgegebenen Kennlinie ermittelt. Die dabei berücksichtigten zurückliegenden Steuerzeiten des Auslassventils sind solche Steuerzeiten des Auslassventils, welche außerhalb des externen Bremsmodus im Zusammenhang mit einer Regelung zur Verringerung der Bremskraft bestimmt worden und für die Bestimmung des Korrekturfaktors abgespeichert werden.

In einer weiteren Ausführungsform zur Bestimmung des Korrekturfaktors in Abhängigkeit einer Summe der Steuerzeiten des Einlassventils und des Auslassventils wird jeder der erfassten Steuerzeiten eine vorgegebene Zeitkonstante abgezogen. Die Zeitkonstante wird derartig im Voraus bestimmt, dass eine Totzeit beziehungsweise Reaktionszeit unmittelbar nach dem Öffnen eines Ventils ausgeglichen wird.

Die Drucksteuerventile sind vorteilhaft in Bremsdruckleitungen angeordnet, über welche auf einer jenseits eines Druckvorrats liegenden Seite des Drucksteuerventils ein Bremszylinder entlüftet bzw. belüftet wird. Die Drucksteuerventile beherrschen dadurch die Bremsdruckleitung hinter dem Drucksteuerventil, das heißt auf der jenseits des Druckvorrats liegenden Seite des Drucksteuerventils.

Ausführungsbeispiele der Erfindung sind nachstehend anhand der Zeichnung näher erläutert. Es zeigen:
Fig. 1 ein pneumatisches und elektrisches Schema eines Antiblockiersystems in einem Nutzfahrzeug,
Fig. 2 ein pneumatisches und elektrisches Schema eines Antiblockier-systems in einem Nutzfahrzeug mit Anhängefahrzeug,,
Fig. 3 ein grafisches Schaubild von zeitlichen Verläufen der Ansteuerung von Einlassventilen und Auslassventilen,
Fig. 4 ein Flussschaubild eines ersten Ausführungsbeispiels eines Verfahrens zur Einstellung des Bremsdrucks im externen Bremsmodus,
Fig. 5 ein Flussschaubild eines zweiten Ausführungsbeispiels eines Verfahrens zur Einstellung des Bremsdrucks im externen Bremsmodus,
Fig. 6 ein Flussschaubild eines dritten Ausführungsbeispiels eines Verfahrens zum Einstellen des Bremsdrucks im externen Bremsmodus,
Fig. 7 ein Flussschaubild eines vierten Ausführungsbeispiels eines Verfahrens zum Einstellen des Bremsdrucks im externen Bremsmodus.

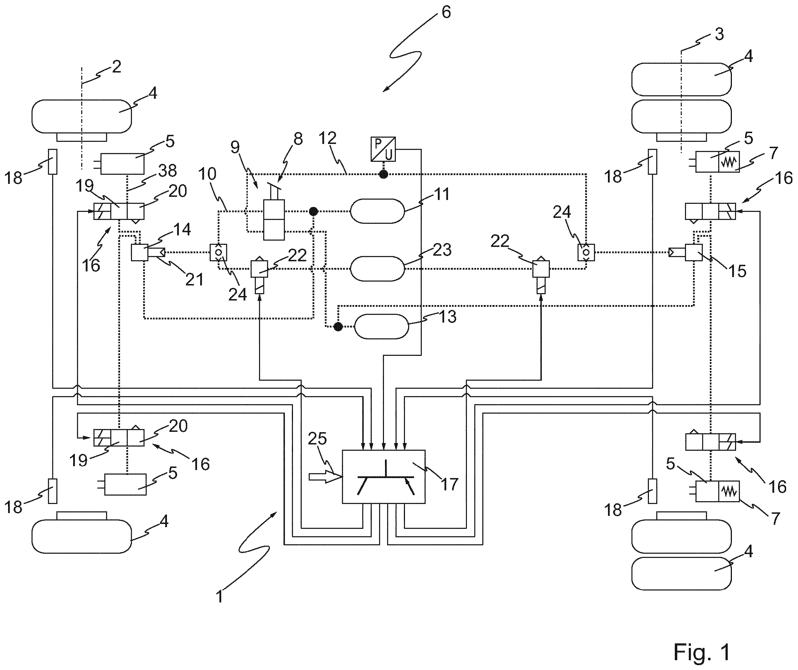

Fig. 1 zeigt einen elektrisch-pneumatischen Plan einer Bremsanlage 1 eines Kraftfahrzeugs 6, insbesondere eines Nutzfahrzeugs. Elektrische Leitungen sind mit Volllinien und pneumatische Leitungen mit punktierten Linien dargestellt. Das Kraftfahrzeug 6 umfasst im gezeigten Ausführungsbeispiel zwei Achsen, nämlich eine Vorderachse 2 und eine Hinterachse 3, an denen jeweils beidseitig Räder 4 angeordnet sind. Zum Abbremsen der Räder 4 ist jedem Rad 4 ein Bremszylinder 5 zugeordnet, welcher entsprechend dem anliegenden pneumatischen Bremsdruck eine Bremskraft auf das drehende Rad ausübt. An den Rädern 4 der Hinterachse 3 sind dabei Bremszylinder 5 mit Federspeichern 7 vorgesehen, welche einer Feststellbremse dienen.

Im Betrieb des Kraftfahrzeugs 6 kann der Fahrer des Kraftfahrzeugs 6 durch Betätigen eines Bremspedals 8 pneumatischen Druck zu den Bremszylindern 5 durchschalten. Das Bremspedal 8 ist im gezeigten Ausführungsbeispiel an ein Betriebsbremsventil 9 gekoppelt, welches sich bei Betätigen des Bremspedals 8 öffnet. In anderen Ausführungsbeispielen ist ein elektrischer Fahrsignalgeber vorgesehen, anhand dessen elektrischen Betätigungssignal pneumatischer Druck durchgeschaltet wird.

Die Bremsanlage 1 des Kraftfahrzeugs 6 weist im gezeigten Ausführungsbeispiel zwei Bremskreise auf, von welchen ein erster Bremskreis 10 über das Betriebsbremsventil 9 mit einem ersten Druckvorrat 11 verbindbar ist und ein zweiter Bremskreis 12 mit einem zweiten Druckvorrat 13 verbindbar ist. Der erste Bremskreis 10 umfasst ein erstes Relaisventil 14, welches zwischen dem Betriebsbremsventil 9 und den angeschlossenen Bremszylindern 5 angeordnet ist. Entsprechend ist im zweiten Bremskreis 12 ein zweites Relaisventil 15 zwischen dem Betriebsbremsventil 9 und den angeschlossenen Bremszylindern 6 des zweiten Bremskreises 12 angeordnet.

Die Bremsanlage 1 des Kraftfahrzeugs 40 umfasst ein Antiblockiersystem, welches bedarfsweise über Drucksteuerventile 16 in den Bremsvorgang eines zum Blockieren neigenden Rades 4 eingreift. Jedem Rad 4 ist dabei ein Drucksteuerventil 16 zugeordnet, welches unmittelbar vor den jeweiligen Bremszylindern 6 angeordnet ist, das heißt im gezeigten Ausführungsbeispiel zwischen den Relaisventilen 14, 15 und den jeweiligen Bremszylindern 5, 6. Jedes Drucksteuerventil 16 ist mit dem jeweiligen Bremszylinder 5 über eine Bremsdruckleitung 38 verbunden. Die Drucksteuerventile 16 sind von einer Steuereinheit 17 elektrisch ansteuerbar, und zwar in Abhängigkeit einer dynamischen Zustandsgröße der bremsenden Räder. Hierzu ist jedem Rad ein Sensor zugeordnet, welcher im gezeigten Ausführungsbeispiel ein Drehzahlsensor 18 ist. Der Drehzahlsensor 18 sensiert somit den Bewegungszustand des Rades. Tritt an einem Rad eine Blockierneigung auf, das heißt die ermittelten Werte überschreitend vorgegebene Grenzen, so gibt die Steuereinheit 17 elektrische Stellbefehle an das Drucksteuerventil 16 des zum Blockieren neigenden Rades 4.

Die Drucksteuerventile 16 sind eine Kombination von wenigstens zwei Magnetventilen, nämlich einem Einlassventil 19 und einem Auslassventil 20. Das Einlassventil 19 dient dabei prinzipiell zur Druckerhöhung beziehungsweise zum Halten des Drucks im Bremszylinder 5, während das Auslassventil 20 zur Reduzierung des Bremsdrucks geöffnet wird und den jeweils angeschlossenen Bremszylinder 5 entlüftet. Das Einlassventil 19 und das Auslassventil 20 sind im Ausführungsbeispiel 2/2-Wegeventile, welche elektrisch von der Steuereinheit 17 ansteuerbar sind.

Die Einlassventile 19 sind über das Relaisventil 14, 15 mit dem Druckvorrat 11, 13 des jeweiligen Bremskreises 10, 12 verbindbar. Das heißt, dass die Drucksteuerventile 16 des ersten Bremskreises 10 der Vorderachse 2 über das erste Relaisventil 14 mit dem ersten Druckvorrat 11 fluidisch verbindbar sind und die Drucksteuerventile 16 des zweiten Bremskreises 12 über das zweite Relaisventil 15 mit dem zweiten Druckvorrat 13 verbindbar sind.

Die Steuereinheit 17 ist dazu ausgebildet und konfiguriert, unabhängig vom Fahrerwunsch selbsttätig in Abhängigkeit der dynamischen Zustandsgrößen der zu bremsenden Räder auf den Bremsvorgang einzuwirken und gibt bedarfsweise die Verbindung zwischen den Drucksteuerventilen und den jeweils angeschlossenen Druckvorräten 11, 13 frei. Dabei steuert die Steuereinheit 17 ein 3/2-Wegeventil 22 an, welches zwischen dem Steuereingang 21 des Relaisventils 14 und einem dritten Druckvorrat 23 angeordnet ist.

Das Betriebsbremsventil 9 und das 3/2-Wegeventil 22 des Antiblockiersystems sind über ein Doppelrückschlagventil 24 an den Steuereingang 21 des Relaisventils 14 gekoppelt. Entsprechend ist im zweiten Bremskreis 12 ein 3/2-Wegeventil 22 vorgesehen, welches über ein Doppelrückschlagventil 24 des zweiten Bremskreises 12 an das Relaisventil 15 des zweiten Bremskreises 12 gekoppelt ist.

Die Steuereinheit 17 weist einen Eingang für externe Bremsanforderungen 25 auf und stellt bei Vorliegen einer externen Bremsanforderung in einem dafür vorgesehenen externen Bremsmodus in der externen Bremsanforderung entsprechenden Bremsdruck über Ansteuerung der Drucksteuerventile 16 ein. Eine externe Bremsanforderung ist typischerweise ein von einem externen Fahrerassistenzsystem des Kraftfahrzeugs 6 festgestelltes Bremsbedürfnis. Derartige Fahrerassistenzsysteme des Kraftfahrzeugs 6 weisen oft eine eigene Steuerelektronik und Sensorik auf und können mit der Steuereinheit 17 des Antiblockiersystems beispielsweise über einen Datenbus verbunden sein. Unter einen externen Bremsanforderung werden jedoch nicht nur solche Anforderungen von Bremsleistung verstanden, welche von externen Fahrerassistenzsystemen mitgeteilt werden, sondern können jede Art von Bremsanforderung sein, welche nicht zu den internen Bremsanforderungen des Antiblockiersystems zu zählen sind.

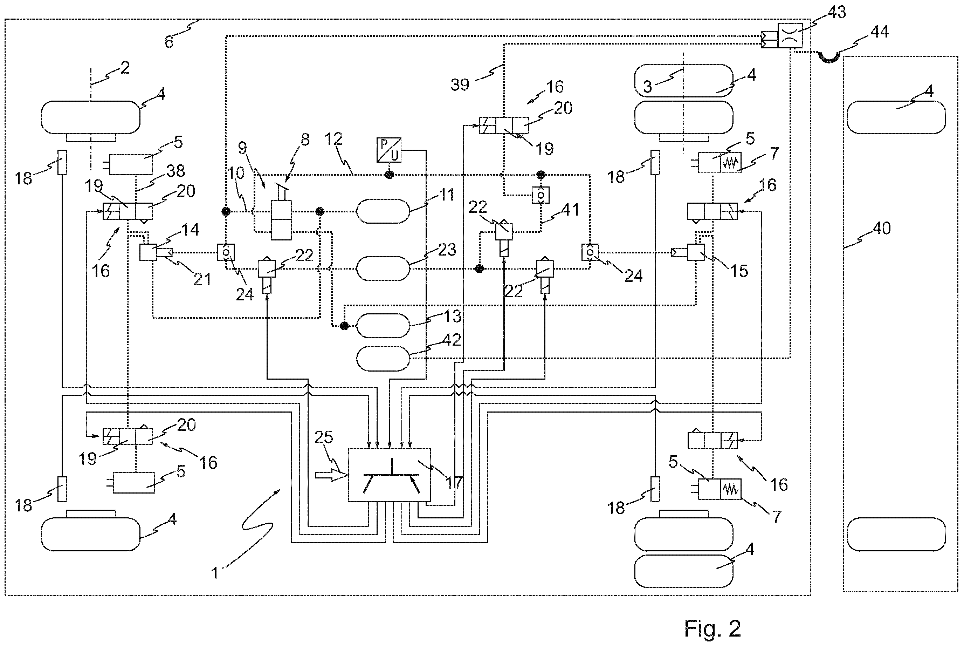

Im Ausführungsbeispiel gemäß Fig. 1 ist ein Zugfahrzeug dargestellt. Fig. 2 zeigt einen elektrisch-pneumatischen Plan einer Bremsanlage 1 eines Kraftfahrzeugs 6, insbesondere eines Nutzfahrzeugs bzw. Zugfahrzeugs eines Gespanns, an welches ein Anhängefahrzeug 40 bzw. dessen Bremssystem anschließbar ist. Elektrische Leitungen sind mit Volllinien und pneumatische Leitungen mit punktierten Linien dargestellt. Mit Ausnahme der nachstehenden Besonderheiten entspricht der Aufbau der Bremsanlage 1' dem Aufbau der Bremsanlage 1 des Nutzfahrzeugs gemäß Fig. 1.

Zur Aktivierung eines Bremssystems des Anhängefahrzeugs 40 ist ein dritter Bremskreis 41 eingerichtet. Der dritte Bremskreis 41 weist ähnlich dem ersten Bremskreis 11 und dem zweiten Bremskreis 12 ein Drucksteuerventil 16, ein Doppelrückschlagventil 24 und ein 3/2-Wegeventil 22 auf. Das Drucksteuerventil 16 des dritten Bremskreises 41 bzw. dessen Einlassventil 19 und Auslassventil 20 ist von der Steuereinheit 17 steuerbar. Im Unterschied zu dem ersten Bremskreis 11 und dem zweiten Bremskreis 12 ist eine Bremsdruckleitung 39 hinter dem Drucksteuerventil 16 mit einem Kontrollventil 43 verbunden, welches die Verbindung zwischen dem vierten Druckvorrat 42 und einem pneumatischen Kupplungskopf 44 beherrscht. An den Kupplungskopf 44 ist das Bremssystem des Anhängefahrzeugs 40 ankuppelbar.

Das Kontrollventil 43 ist im gezeigten Ausführungsbeispiel durch den Druck in der Bremsdruckleitung 39 vorgesteuert, so dass das Bremssystem indirekt über die Bremsanlage 1'des Nutzfahrzeugs 6 aktivierbar bzw. steuerbar ist. Das Bremssystem des Anhängefahrzeugs 40 ist im gezeigten Ausführungsbeispiel aus einem vierten Druckvorrat 42 gespeist, welcher durch die Vorsteuerung freigebbar ist. In dieser Gestaltung ist durch das Drucksteuerventil 16 ein sehr kleines Volumen, nämlich ausschließlich das Volumen der Bremsdruckleitung 39, zu Belüften bzw. zu Entlüften. Die Einstellung des Bremsdrucks in der Bremsdruckleitung erfolgt gemäß der nachstehenden Beschreibung.

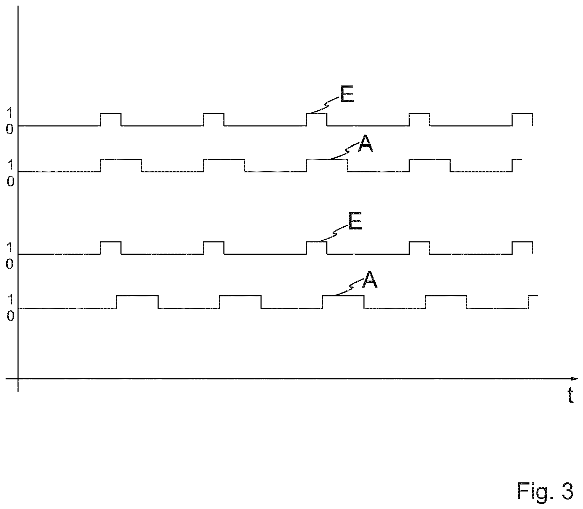

Ausführungsbeispiele für die Einstellung des Bremsdrucks im externen Bremsmodus entsprechend einer externen Bremsanforderung 25 sind nachstehend anhand der Figuren 3 bis 7 näher erläutert.

Gemäß der Erfindung werden die Steuerzeiten des Auslassventils in Abhängigkeit der Steuerung des Einlassventils des jeweiligen Drucksteuerventils von der Steuereinheit bestimmt, wobei sehr kleine Drucksprünge steuerbar sind. Fig. 3 zeigt zeitliche Verläufe des Einschaltzustandes des Einlassventils und des Auslassventils für zwei Beispiele während eines externen Bremsmodus. In den zeitlichen Verläufen repräsentiert dabei jeweils der Schaltzustand "1" den einge-schalteten Zustand des jeweiligen Ventils und der Schaltzustand "0" den ausgeschalteten Zustand des jeweiligen Ventils. Für jedes Ausführungsbeispiel sind dabei jeweils ein Schaltzustand E des Einlassventils und ein Schaltzustand A des Auslassventils dargestellt.

Bei einer Bremsung, im gezeigten Ausführungsbeispiel aufgrund einer externen Bremsanforderung, werden die Drucksteuerventile zur Umsetzung der Bremsanforderung im unteren Bremsdruckbereich in beiden Ausführungsbeispielen derart angesteuert, dass sich die Öffnungszeiten von Einlassventil und Auslassventil überschneiden. Im ersten Ausführungsbeispiel gemäß Fig. 3 erfolgt die Ansteuerung des Auslassventils ungefähr gleichzeitig mit der Ansteuerung des Einlassventils. Das andere Ausführungsbeispiel zeigt eine zeitversetzte Ansteuerung des Auslassventils nach der Ansteuerung des Einlassventils. In weiteren, nicht gezeigten Ausführungsbeispielen erfolgt die Ansteuerung unmittelbar nach Beendigung des Einlassventils oder etwas zeitversetzt nach Beendigung der Ansteuerung des Einlassventils. Vorzugsweise kann jedes Drucksteuerventil 22 eine der oben genannten Ansteuerungen unabhängig von der Ansteuerung der anderen Drucksteuerventile 22 ausführen.

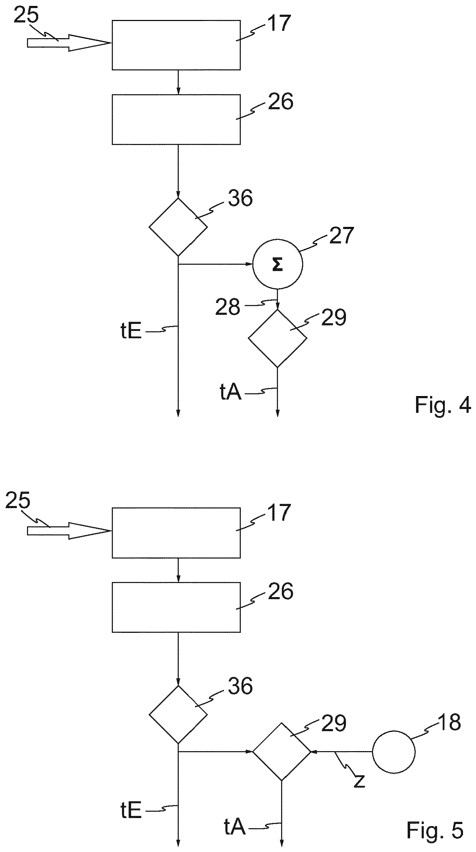

Fig. 4 zeigt ein Verfahren zur Bestimmung der Steuerzeiten tA des Auslassven-tils in Abhängigkeit der Steuerung des Einlassventils. Erfasst die Steuereinheit 17 eine externe Bremsanforderung 25, so schaltet die Steuereinheit in den externen Bremsmodus 26, wobei der Bremsdruck über Ansteuerung des Drucksteuerventils eingestellt wird und dabei die Steuerzeiten des Auslassventils in Abhängigkeit der Steuerung des Einlassventils bestimmt werden. Dabei werden die mehrfachen Ansteuerungen des Einlassventils während des Aufbaus von Bremsdruck in einem Zählschritt 27 gezählt. Die Steuerzeiten tA des Auslassventils werden in Abhängigkeit der Anzahl 28 bereits erfolgter Ansteuerungen des Einlassventils bestimmt.

Fig. 5 zeigt ein weiteres Ausführungsbeispiel eines Verfahrens zum Einstellen des Bremsdrucks im externen Bremsmodus 26, wobei für jeweils gleiche Merkmale die gleichen Bezugszeichen verwendet sind wie in Fig. 4. Im Ausführungsbeispiel gemäß Fig. 5 werden die Steuerzeiten tA des Auslassventils in Abhängigkeit der Steuerzeiten tE des Einlassventils bestimmt. Hierzu wird im externen Bremsmodus 26 die Steuerzeit tE des Einlassventils bestimmt und bei der Bestimmung der Steuerzeit tE berücksichtigt. In einem Bestimmungsschritt 29 wird die Steuerzeit tA des Auslassventils unter Berücksichtigung eines Korrekturfaktors 30 bestimmt. Mit dem Korrekturfaktor 30 werden die Einlasszeiten tE des Einlassventils gewichtet, um so Werte für die Steuerzeiten tA des Auslassventils zu bestimmen. Der Korrekturfaktor wird im Ausführungsbeispiel gemäß Fig. 5 in Abhängigkeit einer gemessenen Fahrzeugverzögerung z nach einer vorgegebenen Ermittlungsvorschrift 31 laufend ermittelt. Die Fahrzeugverzögerung z wird vorteilhaft aus den Messwerten der Drehzahlsensoren 18 (Fig. 1) hergeleitet.

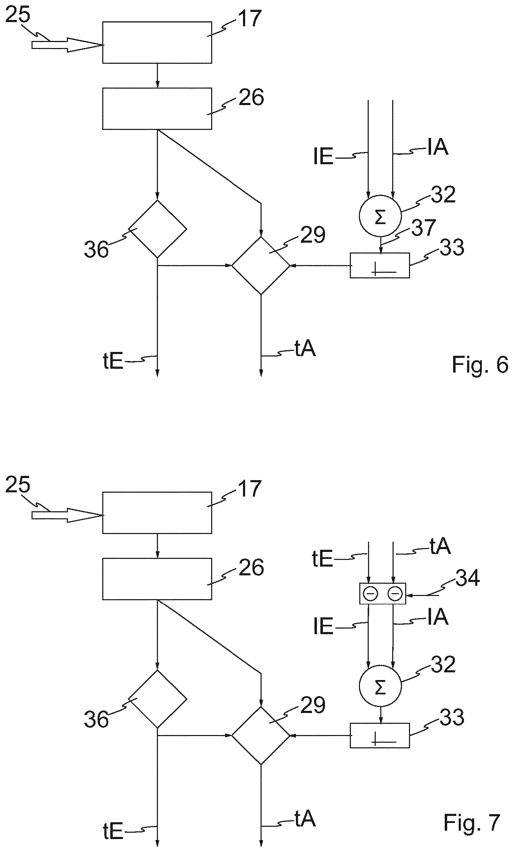

Fig. 6 zeigt ein weiteres Ausführungsbeispiel eines Verfahrens zum Einstellen des Bremsdrucks, wobei für die gleichen Merkmale die jeweils gleichen Bezugszeichen wie in Fig. 4 und 5 verwendet sind. Wie im Ausführungsbeispiel gemäß Fig. 5 wird auch im Ausführungsbeispiel gem. Fig. 6 die Steuerzeit tA des Auslassventils in Abhängigkeit der Steuerzeit tE des Einlassventils und einem Korrekturfaktor 30 bestimmt. Im Unterschied zum Ausführungsbeispiel gemäß Fig. 5 wird der Korrekturfaktor 30 in Abhängigkeit einer Summe der Steuerzeiten tE bereits erfolgte Ansteuerungen des Einlassventils und solcher Steuerzeiten des Auslassventils, die zuvor im Zusammenhang mit einer Reduzierung des Bremsdrucks bestimmt wurden, nach einer vorgegebenen Kennlinie 33 ermittelt. Hierzu werden Informationen IE zu den Steuerzeiten bereits erfolgter Ansteuerungen des Einlassventils und Informationen IA solcher Steuerzeiten des Auslassventils, die zuvor in Zusammenhang mit einer Reduzierung des Bremsdrucks außerhalb des externen Bremsmodus bestimmt und abgespeichert wurden, in einem Summierschritt 32 verknüpft. Mit dem im Summierschritt gebildeten Summenwert 37 wird aus einer vorgegebenen Kennlinie 33 der Korrekturfaktor 30 bestimmt, mit dem die Steuerzeit tE des Einlassventils gewichtet wird, um so die Steuerzeit tA des Auslassventils zu bestimmen.

Fig. 7 zeigt ein weiteres Ausführungsbeispiels eines Verfahrens zum Einstellen des Bremsdrucks und insbesondere zur Bestimmung der auf Steuerzeit tA des Auslassventils in Abhängigkeit der Steuerzeit tE des Einlassventils. Das Ausführungsbeispiel gemäß Fig. 7 entspricht mit Ausnahme der nachfolgenden Unterschiede dem Ausführungsbeispiel gemäß Fig. 6, das heißt insbesondere, dass ein Korrekturfaktor 30 in Abhängigkeit einer Summe der Steuerzeiten bereits erfolgter Ansteuerungen des Einlassventils und solcher Steuerzeiten des Auslassventils, die zuvor im Zusammenhang mit einer Reduzierung des Bremsdrucks bestimmt wurden, nach einer vorgegebenen Kennlinie 33 ermittelt werden.

Im Unterschied zum Ausführungsbeispiel gemäß Fig. 6 werden im Summierschritt 32 von den zu summierenden Steuerzeiten des Einlassventils und des Auslassventils jeweils eine vorgegebene Zeitkonstante 34 von den zuvor gespeicherten Steuerzeiten tE des Einlassventils und Steuerzeiten tA des Auslassventils in einem Korrekturschritt 35 abgezogen. Die Zeitkonstante berücksichtigt bei unterschiedlichen Steuerzeiten von Einlassventil und Auslassventil eine anfängliche Totzeit oder Reaktionszeit, in der neben einer effektiven Ventilöffnungszeit kein Bremsdruck ausgesteuert wird. Entsprechend wird die abzuziehende Zeitkonstante 34 im Voraus bestimmt und für den Korrekturschritt 35 im externen Bremsmodus 26 bereitgestellt.

### Bezugszeichenliste (Bestandteil der Beschreibung)

- 1,1': Bremsanlage
- 2: Vorderachse
- 3: Hinterachse
- 4: Rad
- 5: Bremszylinder
- 6: Kraftfahrzeug
- 7: Federspeicher
- 8: Bremspedal
- 9: Betriebsbremsventil
- 10: Erster Bremskreis
- 11: Erster Druckvorrat
- 12: Zweiter Bremskreis
- 13: Zweiter Druckvorrat
- 14: Erstes Relaisventil
- 15: Zweites Relaisventil
- 16: Drucksteuerventil
- 17: Steuereinheit
- 18: Drehzahlsensor
- 19: Einlassventil
- 20: Auslassventil
- 21: Steuereingang
- 22: 3/2-Wegeventil
- 23: Dritter Druckvorrat
- 24: Doppelrückschlagventil
- 25: Externe Bremsanforderung
- 26: Externer Bremsmodus
- 27: Zählschritt
- 28: Anzahl
- 29: Bestimmungsschritt
- 30: Korrekturfaktor
- 31: Ermittlungsvorschrift
- 32: Summierschritt
- 33: Kennlinie
- 34: Zeitkonstante
- 35: Korrekturschritt
- 36: Bestimmungsschritt
- 37: Summenwert
- 38: Bremsdruckleitung
- 39: Bremsdruckleitung Anhänger
- 40: Anhängefahrzeug
- 41: Dritter Bremskreis
- 42: Vierter Druckvorrat
- 43: Kontrollventil
- 44: Kupplungskopf

- tE: Steuerzeit Einlassventil
- tA: Steuerzeit Auslassventil
- E: Schaltzustand Einlassventil
- A: Schaltzustand Auslassventil
- z: Fahrzeugverzögerung
- IE: Information Einlassventil
- IA: Information Auslassventil

## Patentansprüche

1. Verfahren zum Einstellen von Bremsdrücken eines Kraftfahrzeugs (6), wobei eine Steuereinheit (17) unter Berücksichtigung von ermittelten dynamischen Zustandsgrößen der zu bremsenden Räder (4) ein Drucksteuerventil (16) mit einem Einlassventil (19) zur Belüftung und mit einem Auslassventil (20) zur Entlüftung der jeweils von dem Drucksteuerventil (16) beherrschten Bremsdruckleitung (38, 39) ansteuert, wobei die Steuerzeiten (tA) des Auslassventils (20) in Abhängigkeit der Steuerung des Einlassventils (19) bestimmt werden, **dadurch gekennzeichnet, dass** die Steuerzeiten (tA) des Auslassventils (20) in Abhängigkeit der Steuerzeiten (tE) des Einlassventils (19) bestimmt werden und wobei während eines Bremsvorgangs ein Korrekturfaktor (30) ermittelt wird, mit dem die Steuerzeiten (tE) des Einlassventils (19) zur Bestimmung der Steuerzeiten (tA) des Auslassventils (20) gewichtet werden.

2. Verfahren nach Anspruch 1, **dadurch gekennzeichnet, dass** die Steuereinheit (17) bei Empfang einer vom Fahrerbremswunsch unabhängigen externen Bremsanforderung (25) in einem für diesen Fall vorgesehenen externen Bremsmodus (26) den der externen Bremsanforderung (25) entsprechenden Bremsdruck in der Bremsdruckleitung (38, 39) durch Bestimmung der Steuerzeiten (tA) des Auslassventils (20) in Abhängigkeit der Steuerung des Einlassventils (19) einstellt.

3. Verfahren nach Anspruch 1 oder 2, **dadurch gekennzeichnet, dass** sich die Steuerzeiten (tE) des Einlassventils (19) und die Steuerzeiten (tA) des Auslassventils (20) zumindest teilweise überschneiden.

4. Verfahren nach einem der vorhergehenden Ansprüche, **dadurch gekennzeichnet, dass** die Anzahl (28) der Ansteuerungen des Einlassventils (19) während des Aufbaus von Bremsdruck gezählt wird und die Steuerzeiten (tA) des Auslassventils (20) in Abhängigkeit der Anzahl (28) bereits erfolgter Ansteuerungen des Einlassventils (19) bestimmt werden.

5. Verfahren nach Anspruch 1, **dadurch gekennzeichnet, dass** der Korrekturfaktor (30) in Abhängigkeit einer gemessenen Fahrzeugverzögerung (z) nach einer vorgegebenen Ermittlungsvorschrift (31) laufend ermittelt wird.

6. Verfahren nach Anspruch 1, **dadurch gekennzeichnet, dass** der Korrekturfaktor (30) in Abhängigkeit einer Summe der Steuerzeiten (tE) bereits erfolgter Ansteuerungen des Einlassventils und solcher Steuerzeiten des Auslassventils (20), die zuvor in Zusammenhang mit einer Reduzierung des Bremsdrucks bestimmt wurden, nach einer vorgegebenen Kennlinie (33) ermittelt werden.

7. Verfahren nach Anspruch 6, **dadurch gekennzeichnet, dass** von den zu summierenden Steuerzeiten (tE) des Einlassventils (19) und den Steuerzeiten (tA) des Auslassventils (20) jeweils eine vorgegebene Zeitkonstante (34) abgezogen wird.

8. Verfahren nach einem der vorhergehenden Ansprüche, **dadurch gekennzeichnet, dass** über die Bremsdruckleitung (38) auf einer jenseits eines Druckvorrats (11, 13) liegenden Seite eines Drucksteuerventils (16) ein Bremszylinder (5) entlüftet bzw. belüftet wird.

9. Verfahren nach einem der vorhergehenden Ansprüche, **dadurch gekennzeichnet, dass** ein Bremssystem eines Anhängefahrzeugs (40) indirekt über eine Bremsdruckleitung (39) für das Anhängefahrzeug (40) und ein in dieser Bremsdruckleitung (39) angeordnetes Drucksteuerventil (16) aktivierbar ist.

10. Bremsanlage (1) eines Kraftfahrzeuges (6) zur Durchführung des Verfahrens nach einem der Ansprüche 1 bis 9, mit pro Rad (4) einem Bremszylinder (5) und einem Drucksteuerventil (16), welches ein Einlassventil (19) zur Belüftung und ein Auslassventil (20) zur Entlüftung einer mittelbar oder unmittelbar an den Bremszylinder (5) angeschlossenen Bremsdruckleitung (38) aufweist, welche von einer Steuereinheit (17) unter Berücksichtigung von ermittelten dynamischen Zustandsgrößen der zu bremsenden Räder (4) ansteuerbar sind, wobei die Steuereinheit (17) ausgebildet und konfiguriert ist, die Steuerzeiten (tA) des Auslassventils (20) in Abhängigkeit der Steuerung des Einlassventils (19) zu bestimmen und während eines Bremsvorgangs einen Korrekturfaktor (30) zu bestimmen, mit dem die Steuerzeiten (tE) des Einlassventils (19) zur Bestimmung der Steuerzeiten (tA) des Auslassventils (20) gewichtet werden.

11. Bremsanlage nach Anspruch 10, **dadurch gekennzeichnet, dass** die Steuereinheit (17) für den Empfang einer vom Fahrerbremswunsch unabhängigen externen Bremsanforderung (25) ausgebildet ist.

12. Bremsanlage nach Anspruch 10 oder 11, **dadurch gekennzeichnet, dass** die Bremsdruckleitungen (38) auf einer jenseits eines Druckvorrats (11, 13) liegenden Seite eines Drucksteuerventils (16) an einen Bremszylinder (5) angeschlossen sind.

13. Bremsanlage nach einem der Ansprüche 10 bis 12, **dadurch gekennzeichnet, dass** in einem dritten Bremskreis eine Bremsdruckleitung (39) für ein Anhängefahrzeug (40) mit einem in dieser Bremsdruckleitung (39) angeordneten Drucksteuerventil (16), dessen Einlassventil (19) und Auslassventil (20) von der Steuereinheit (17) ansteuerbar sind, an einen pneumatischen Kupplungskopf (44) angeschlossen ist, an welchen ein Bremssystem des Anhängefahrzeugs (40) ankuppelbar und über die Bremsdruckleitung (39) für das Anhängefahrzeug (40) aktivierbar ist.

14. Kraftfahrzeug (6) mit einer Bremsanlage (1) nach Anspruch 10 zur Durchführung eines Verfahrens nach einem der Ansprüche 1 bis 9.

## Claims

1. A method for adjusting brake pressures of a motor vehicle (6), wherein a control unit (17) controls a pressure control valve (16) having an inlet valve (19) for admitting air to and having an outlet valve (20) for releasing air from the brake pressure line (38, 39) in each case controlled by the pressure control valve (16) taking into account determined dynamic state variables of the wheels (4) to be braked, wherein the engine timing (tA) of the outlet valve (20) are determined as a function of the control of the inlet valve (19), **characterized in that** the engine timing (tA) of the outlet valve (20) is determined as a function of the engine timing (tE) of the inlet valve (19) and wherein, during a braking operation, a correction factor (30) is determined, with which the engine timing (tE) of the inlet valve (19) is weighted for determining the engine timing (tA) of the outlet valve (20).

2. The method according to claim 1, **characterized in that**, upon receipt of an external braking request (25), independently from the driver braking demand in an external braking mode (26) provided for this case, the control unit (17) adjusts the brake pressure corresponding to the external braking request (25) in the brake pressure line (38, 39) by determining the engine timing (tA) of the outlet valve (20) as a function of the control of the inlet valve (19).

3. The method according to claim 1 or 2, **characterized in that** the engine timing (tE) of the inlet valve (19) and the engine timing (tA) of the outlet valve (20) overlap at least partially.

4. The method according to any of the foregoing claims, **characterized in that** the number (28) of activations of the inlet valve (19) during the buildup of brake pressure is counted and the engine timing (tA) of the outlet valve (20) is determined as a function of the number (28) of activations of the inlet valve (19) that have already occurred.

5. The method according to claim 1, **characterized in that** the correction factor (30) is continuously determined as a function of a measured vehicle delay (z) according to a specified determination specification (31).

6. The method according to claim 1, **characterized in that** the correction factor (30) is determined as a function of a total of the engine timing (tE) of activations of the inlet valve that have already occurred and of such engine timing of the outlet valve (20) that was determined previously in connection with a reduction of the brake pressure, according to a specified characteristic (33).

7. The method according to claim 6, **characterized in that** in each case, a specified time constant (34) is deducted from the engine timing (tE) of the inlet valve (19) to be totaled and the engine timing (tA) of the outlet valve (20).

8. The method according to any of the foregoing claims, **characterized in that** a brake cylinder (5) is ventilated via the brake pressure line (38) on a side of a pressure control valve (16) lying across from a pressure source (11, 13).

9. The method according to any of the foregoing claims, **characterized in that** a braking system of a trailer vehicle (40) can be activated indirectly via a brake pressure line (39) for the trailer vehicle (40) and a pressure control valve (16) arranged in this brake pressure line (39).

10. A braking system (1) of a motor vehicle (6) for carrying out the method according to any of claims 1 to 9, with one brake cylinder (5) per wheel (4) and a pressure control valve (16) which has an inlet valve (19) for admitting air to and an outlet valve (20) for releasing air from a brake pressure line (38) connected directly or indirectly to the brake cylinder (5), which can be controlled by a control unit (17) taking into account determined dynamic state variables of the wheels (4) to be braked, wherein the control unit (17) is embodied and configured to determine the engine timing (tA) of the outlet valve (20) as a function of the control of the inlet valve (19) and to determine a correction factor (30) during a braking operation, with which the engine timing (tE) of the inlet valve (19) is weighted for determining the engine timing (tA) of the outlet valve (20).

11. The braking system according to claim 10, **characterized in that** the control unit (17) is embodied for the receipt of an external braking request (25) independent from the driver braking demand.

12. The braking system according to claim 10 or 11, **characterized in that** the brake pressure lines (38) on a side of a pressure control valve (16) lying across from a pressure source (11, 13) are connected to a brake cylinder (5).

13. The braking system according to any of claims 10 to 12, **characterized in that**, in a third brake circuit, a brake pressure line (39) for a trailer vehicle (40) having a pressure control valve (16) arranged in this brake pressure line (39), whose inlet valve (19) and outlet valve (20) can be controlled by the control unit (17), is connected to a pneumatic coupling head (44), to which a braking system of the trailer vehicle (40) can be coupled and which can be activated via the brake pressure line (39) for the trailer vehicle (40).

14. A motor vehicle (6) having a braking system (1) according to claim 10 for carrying out a method according to any of claims 1 to 9.

## Revendications

1. Procédé destiné à régler des pressions de freinage d'un véhicule automobile (6), dans lequel une unité de commande (17) pilote, en tenant compte de grandeurs d'état dynamiques établies des roues (4) à freiner, une valve modulatrice de pression (16) avec une soupape d'admission (19) pour ventiler et avec une soupape d'échappement (20) pour purger le tuyau de pression de freinage (38, 39) respectivement contrôlé par la valve modulatrice de pression (16), dans lequel les temps de commande (tA) de la soupape d'échappement (20) sont déterminés en fonction de la commande de la soupape d'admission (19), **caractérisé en ce que** les temps de commande (tA) de la soupape d'échappement (20) sont déterminés en fonction des temps de commande (tE) de la soupape d'admission (19) et dans lequel pendant un processus de freinage est établi un facteur de correction (30) avec lequel les temps de commande (tE) de la soupape d'admission (19) sont pondérés pour déterminer les temps de commande (tA) de la soupape d'échappement (20).

2. Procédé selon la revendication 1, **caractérisé en ce que** l'unité de commande (17) règle, à réception d'une demande de freinage (25) extérieure indépendante du souhait de freinage de conducteur, dans un mode de freinage (26) extérieur prévu pour ce cas-là, la pression de freinage correspondant à la demande de freinage (25) extérieure dans le tuyau de pression de freinage (38, 39), par détermination des temps de commande (tA) de la soupape d'échappement (20) en fonction de la commande de la soupape d'admission (19).

3. Procédé selon la revendication 1 ou 2, **caractérisé en ce que** les temps de commande (tE) de la soupape d'admission (19) et les temps de commande (tA) de la soupape d'échappement (20) se recoupent au moins partiellement.

4. Procédé selon l'une des revendications précédentes, **caractérisé en ce que** le nombre (28) des pilotages de la soupape d'admission (19) est compté pendant la montée de la pression de freinage et les temps de commande (tA) de la soupape d'échappement (20) sont déterminés en fonction du nombre (28) de pilotages de la soupape d'admission (19) déjà réalisés.

5. Procédé selon la revendication 1, **caractérisé en ce que** le facteur de correction (30) est établi selon une consigne d'établissement (31) prédéfinie, en fonction d'une décélération de véhicule (z) mesurée.

6. Procédé selon la revendication 1, **caractérisé en ce que** le facteur de correction (30) est établi selon une caractéristique (33) prédéfinie, en fonction d'une somme des temps de commande (tE) de pilotages de la soupape d'admission déjà réalisés et de temps de commande de la soupape d'échappement (20) qui ont été précédemment déterminés en lien avec une réduction de la pression de freinage.

7. Procédé selon la revendication 6, **caractérisé en ce qu'**une constante de temps (34) prédéfinie est respectivement déduite des temps de commande (tE) de la soupape d'admission (19) et des temps de commande (tA) de la soupape d'échappement (20) à additionner

8. Procédé selon l'une des revendications précédentes, **caractérisé en ce qu'**un cylindre de frein (5) est purgé ou ventilé via le tuyau de pression de freinage (38), sur un côté d'une valve modulatrice de pression (16), lequel côté se situant au-delà d'une réserve de pression (11, 13).

9. Procédé selon l'une des revendications précédentes, **caractérisé en ce qu'**un système de freinage d'une remorque (40) peut être activé indirectement via un tuyau de pression de freinage (39) pour la remorque (40) et une valve modulatrice de pression (16) agencée dans ce tuyau de pression de freinage (39).

10. Dispositif de freinage (1) d'un véhicule automobile (6) destiné à exécuter le procédé selon l'une des revendications 1 à 9, avec par roue (4) un cylindre de frein (5) et une valve modulatrice de pression (16), laquelle présente une soupape d'admission (19) pour ventiler et une soupape d'échappement (20) pour purger un tuyau de pression de freinage (38) raccordé immédiatement ou non au cylindre de frein (5), lequel tuyau de pression de freinage peut être piloté par une unité de commande (17) en tenant compte de grandeurs d'état dynamiques établies des roues (4) à freiner, dans lequel l'unité de commande (17) est conçue et configurée pour déterminer les temps de commande (tA) de la soupape d'échappement (20) en fonction de la commande de la soupape d'admission (19) et déterminer, pendant un processus de freinage, un facteur de correction (30) avec lequel les temps de commande (tE) de la soupape d'admission (19) sont pondérés pour déterminer les temps de commande (tA) de la soupape d'échappement (20).

11. Dispositif de freinage selon la revendication 10, **caractérisé en ce que** l'unité de commande (17) est conçue pour la réception d'une demande de freinage (25) extérieure indépendante du souhait de freinage de conducteur.

12. Dispositif de freinage selon la revendication 10 ou 11, **caractérisé en ce que** les tuyaux de pression de freinage (38) sont raccordés à un cylindre de frein (5), sur un côté d'une valve modulatrice de pression (16), lequel côté se situant au-delà d'une réserve de pression (11, 13).

13. Dispositif de freinage selon l'une des revendications 10 à 12, **caractérisé en ce que** dans un troisième circuit de freinage, un tuyau de pression de freinage (39) pour une remorque (40) avec, agencée dans ce tuyau de pression de freinage (39), une valve modulatrice de pression (16) dont la soupape d'admission (19) et la soupape d'échappement (20) peuvent être pilotées par l'unité de commande (17), est raccordé à une tête d'accouplement (44) pneumatique, à laquelle un système de freinage de la remorque (40) peut être couplé et activé via le tuyau de pression de freinage (39) pour la remorque (40).

14. Véhicule automobile (6) avec un dispositif de freinage (1) selon la revendication 10 destiné à exécuter un procédé selon l'une des revendications 1 à 9.
